(19) Europäisches Patentamt / European Patent Office / Office européen des brevets

(11) **EP 4 108 905 B1**

(12) **EUROPEAN PATENT SPECIFICATION**

(45) Date of publication and mention
of the grant of the patent:
**02.04.2025 Bulletin 2025/14**

(21) Application number: **20920052.6**

(22) Date of filing: **18.02.2020**

(51) International Patent Classification (IPC):
**F02M 25/08** *(2006.01)*

(52) Cooperative Patent Classification (CPC):
**F02M 25/0809**

(86) International application number:
**PCT/JP2020/006154**

(87) International publication number:
**WO 2021/166056 (26.08.2021 Gazette 2021/34)**

(54) **FAULT DIAGNOSIS METHOD AND FAULT DIAGNOSIS DEVICE FOR EVAPORATED FUEL PROCESSING DEVICE**

FEHLERDIAGNOSEVERFAHREN UND FEHLERDIAGNOSEVORRICHTUNG FÜR EINE VERARBEITUNGSVORRICHTUNG FÜR VERDUNSTETEN KRAFTSTOFF

PROCÉDÉ DE DIAGNOSTIC DE DÉFAUT ET DISPOSITIF DE DIAGNOSTIC DE DÉFAUT POUR DISPOSITIF DE TRAITEMENT DE CARBURANT ÉVAPORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022 Bulletin 2022/52**

(73) Proprietor: **NISSAN MOTOR Co., Ltd.**
**Yokohama-shi, Kanagawa 221-0023 (JP)**

(72) Inventors:
• **IGARASHI, Kenichi**
  **Atsugi-shi, Kanagawa 243-0123 (JP)**
• **SUZUKI, Takuya**
  **Atsugi-shi, Kanagawa 243-0123 (JP)**

(74) Representative: **Hoefer & Partner Patentanwälte mbB**
**Pilgersheimer Straße 20**
**81543 München (DE)**

(56) References cited:
JP-A- 2002 039 021    JP-A- 2002 039 021
JP-A- 2004 270 534    JP-A- 2004 270 534
JP-A- 2005 023 891    JP-A- 2005 023 891
JP-A- H10 141 153     JP-A- H10 141 153
US-A- 5 592 923       US-B2- 6 736 116

## Description

### Technical Field

This invention relates to a fault diagnosis method and device configured to diagnose a closing fixation of a drain cut valve provided in a drain passage of a canister in an evaporated fuel processing device using the canister.

### Background Art

Conventionally, there have been used an evaporated fuel processing device configured to temporally adsorb an evaporated fuel generated in a fuel tank of a vehicle, to a canister using an adsorbent such as an activated carbon, so that the evaporated fuel does not flows to the outside, and to purge the fuel component from the canister by introduction of fresh air during the driving of the internal combustion engine, so as to introduce to an intake system of the internal combustion engine.

A patent document 1 discloses a method in the evaporated fuel processing device to diagnose a closing fixation of a drain cut valve provided in a drain passage of the canister, by using an intake negative pressure. This method is configured to decrease a pressure within the fuel tank to a predetermined negative pressure by the intake negative pressure in a state in which the drain cut valve is closed, to open the drain cut valve, to judge whether or not a pressure within the fuel tank after a predetermined time period (for example, after 3 seconds) is increased from a pressure value stored before the opening of the drain cut valve by a predetermined pressure difference or more, and to diagnose the closing fixation of the drain cut valve when the pressure increase width is smaller than the predetermined pressure difference. Patent document 2 shows a fault diagnosis device and method according to the preamble of the independent claims.

However, in this conventional method, in a case in which the large negative pressures is not stored within the fuel tank, it is not possible to obtain a large pressure variation when the drain cut valve is opened. Accordingly, it is not possible to perform the appropriate diagnosis when the time period for the introduction of the negative pressure to the purge passage.

### Prior Art Document

### Patent Document

Patent Document 1: Japanese Patent Application Publication No. H9-264207
Patent Document 2: Japanese Patent Publication No. JP H10 141153 A

### Summary of The Invention

A fault diagnosis method of an evaporated fuel processing device is defined according to claim 1 and its related fault diagnosis device is defined according to claim 8.

When the purge is performed by opening the purge control valve in a state in which the drain cut valve is opened, the purge passage pressure becomes the negative pressure by the intake negative pressure of the internal combustion engine. In a case in which the drain cut valve in the drain passage of the canister is not in the closing fixation, the purge passage pressure is relatively rapidly increased to be closer to the atmospheric pressure when the introduction of the intake negative pressure is shut off by closing the purge control valve. On the other hand, when the drain cut valve is fixed in the closing state (including the insufficient opening degree state) irrespective of the opening control of the drain cut valve, the increase of the purge passage pressure becomes gentle. Accordingly, it is possible to diagnosis whether or not the drain cut valve is in the closing fixation by comparing with the predetermined pressure variation.

### Brief Description of Drawings

FIG. 1 is a configuration explanation view showing an evaporated fuel processing device to which a fault diagnosis according to one embodiment is applied.

FIG. 2 is a flowchart showing a flow of operations of the fault diagnosis.
FIG. 3 is a time chart showing a purge passage pressure of the fault diagnosis, and so on.
FIG. 4 is an explanation view showing an estimation principle of the purge passage pressure.

**Description of Embodiments**

Hereinafter, one embodiment according to the present invention is explained in detail with reference to the drawings.

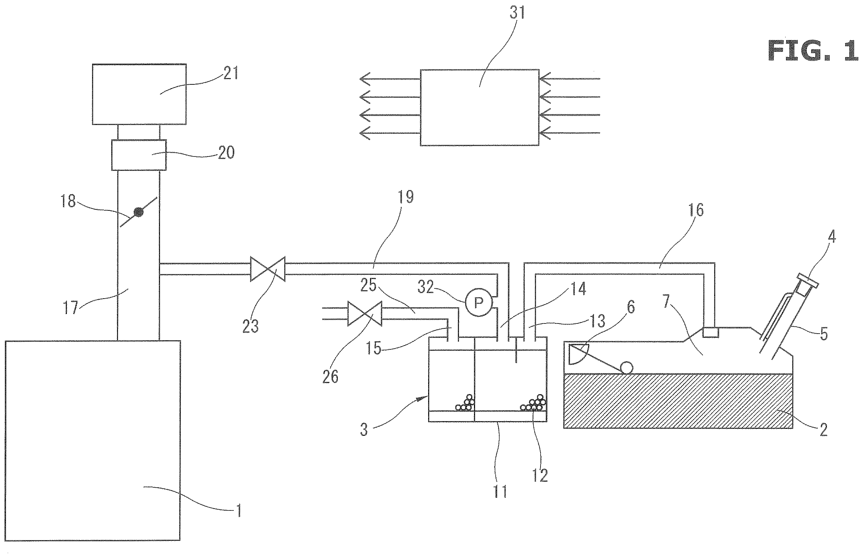

FIG. 1 is a configuration explanation view showing a configuration of an evaporated fuel processing device to which a fault diagnosis according to one embodiment of the present invention is applied. A vehicle (not shown) includes an internal combustion engine 1; and a fuel tank 2. An evaporated fuel processing device using a canister 3 is provided so as to process the evaporated fuel generated within the fuel tank 2. The fuel tank 2 includes a feed pipe portion 5 having an oil filler portion which is positioned at a tip end, and to which a filler cap 4 is detachably mounted. Moreover, a fuel pump unit (not shown) is received within the fuel tank 2. The fuel pump unit is configured to supply the fuel to a fuel injection device (not shown) of the internal combustion engine 1. Furthermore, a fuel level sensor 6 is provided within the fuel tank 2. The fuel level sensor 6 is configured to sense a liquid level height according to a remaining quantity of the fuel. A volume of an upper space 7 remained in an upper portion of the fuel tank 2 is provided by a sensing signal of this fuel level sensor 6.

The canister 3 includes a case 11 which is made from the synthetic resin and so on, and which forms a flow passage having a U shape; and adsorbent 12 which is made from the activated carbon and so on, and which is filled in the case 11. The canister 3 includes a charge port 13 and a purge port 14 which are provided at a first end portion of the U-shaped flow passage in a flow direction; and a drain port 15 which is provided at a second end portion of the U-shaped flow passage in the flow direction. The charge port 13 is an inflow (inlet) portion of the evaporated fuel. The purge portion 14 is an outflow (outlet) portion of the purge gas including the fuel component. The drain port 15 is configured to take in the air at the purge.

The charge port 13 is connected through an evaporated fuel passage 16 to the upper space 7 of the fuel tank 2. The purge port 14 is connected through a purge passage 19 to an intake system of the internal combustion engine 1, for example, an intake passage 17 on a downstream side of a throttle valve 18. A purge control valve 23 is provided in the purge passage 19. The purge control valve 23 is configured to control to introduce the purge gas into the internal combustion engine 1, and to prohibit the introduction of the purge gas in a predetermined condition such as a fuel cut, a state in which the engine is not warmed up, and so on. The purge control valve 23 is, for example, a normally closed electromagnetic valve. Besides, this purge control valve 23 may be configured to be merely opened and closed in an ON/OFF manner. Alternatively, the purge control valve 23 may be configured to continuously control and vary the flow rate of the purge gas by a duty ratio control. An air flow meter 20 and an air cleaner 21 are provided to the intake passage 17.

The drain port 15 is connected to a drain passage 25 having a tip end opened to the atmosphere. A drain cut valve 26 is provided to this drain passage 25. The drain cut valve 26 is configured to open and close the drain passage 25. This drain cut valve 26 is a normally open electromagnetic valve which is opened in the deenergized state. For example, this drain cut valve 26 is configured to be closed with the purge control valve 23 at the leakage diagnosis at which the overall system is closed, and to be basically controlled to the open state in the normal control to open the drain passage 25.

The purge control valve 23 and the drain cut valve 26 are controlled by an engine control unit 31 configured to perform various controls (for example, a fuel injection amount control, an injection timing control, an ignition timing control, an opening degree control of the throttle valve 18, and so on) of the internal combustion engine 1. A valve fixation fault diagnosis (described later) of the drain cut valve 26, and the purge processing during the traveling are performed.

Moreover, a pressure sensor 32 is provided on a canister 3 side of the control valve 23 in the purge passage 19. The pressure sensor 32 is configured to sense the pressure within the purge passage 19. In this example, the pressure sensor 32 is disposed near the purge port 14 of the canister 3. This pressure sensor 32 is configured to sense the pressure of a section between the purge control valve 23 and the canister 3 in the purge passage 19 when the purge control valve 23 is closed. However, in this specification, the pressure near the pressure sensor 32 which is sensed by the pressure sensor 32 is referred to as "purge passage pressure", irrespective of the position and the opening and closing state of the purge control valve 32. Moreover, hereinafter, the purge passage pressure measured by the pressure sensor 32 is represented by "actual purge passage pressure P2real". The purge passage pressure predicted or estimated by calculation described later is represented by "estimated purge passage pressure P2est". The actual purge passage pressure P2real and the estimated purge passage pressure P2est are referred (they are collectively referred) to as "purge passage pressure P2".

The engine control unit 31 directly receives or receives through other controllers, signals from the air flow meter 20, the fuel level sensor 6, the pressure sensor 32, and various sensors (not shown) which are necessary for the control of the internal combustion engine 1, the closing fixation fault diagnosis of the drain cut valve 26, and so on. For example, there are provided an accelerator opening degree sensor indicative of the opening degree of the accelerator pedal operated by the driver, a crank angle sensor indicative of the rotation speed of the internal combustion engine 1, a vehicle speed sensor, a water temperature sensor, a lubricant oil temperature sensor, an atmosphere pressure sensor configured to sense an ambient atmosphere pressure, and an air fuel ratio sensor which is provided for the air fuel ratio control of the internal combustion engine 1, and which is provided on the exhaust side.

In the thus-constructed evaporated fuel processing device, for example, the evaporated fuel generated within the fuel tank 2 at the stop of the vehicle, and so on flows through the charge port 13 into the canister 3, and is adsorbed to the adsorbent 12 such as the activated carbon. Besides, the drain cut valve 26 is basically opened. When the internal combustion engine 1 is brought to a predetermined driving state after the start of the traveling of the vehicle, the purge control valve 23 is appropriately opened while the drain cut valve 26 is maintained to be opened. The purge processing of the fuel components from the canister 3 is performed. That is, the atmosphere is introduced from the drain port 15 by the pressure difference with respect to the intake system of the internal combustion engine 1. The fuel component purged from this adsorbent 12 by this atmosphere becomes the purge gas. The purge gas is introduced through the purge control valve 23 to the intake passage 17 of the internal combustion engine 1. Accordingly, the adsorption amount of the canister 3 is gradually decreased during the driving of the internal combustion engine 1. The canister 3 prepares for the readsorption.

Specifically, the purge through the purge control valve 23 is basically performed when an air fuel ratio feedback condition of the internal combustion engine 1 by using the air fuel ratio sensor is satisfied. The introduction of the purge gas is prohibited in the high load state, at the fuel cut performed in accordance with the decrease of the accelerator opening degree during the traveling, in the non-warm up state in which the air fuel ratio feedback control is not performed, and so on. In this embodiment, when the state is shifted from the purge performing state to the purge end, that is, when the state is shifted from the open state of the purge control valve 23 to the closing state of the purge control valve 23, the closing fixation fault diagnosis of the drain cut valve 26 is performed. Besides, the closing fixation includes a state in which the drain cut valve 26 is not opened at all, and a state in which the opening degree is insufficient. That is, the closing fixation is a state in which the pressure loss by the drain cut valve 26 is equal to or greater than a predetermined level.

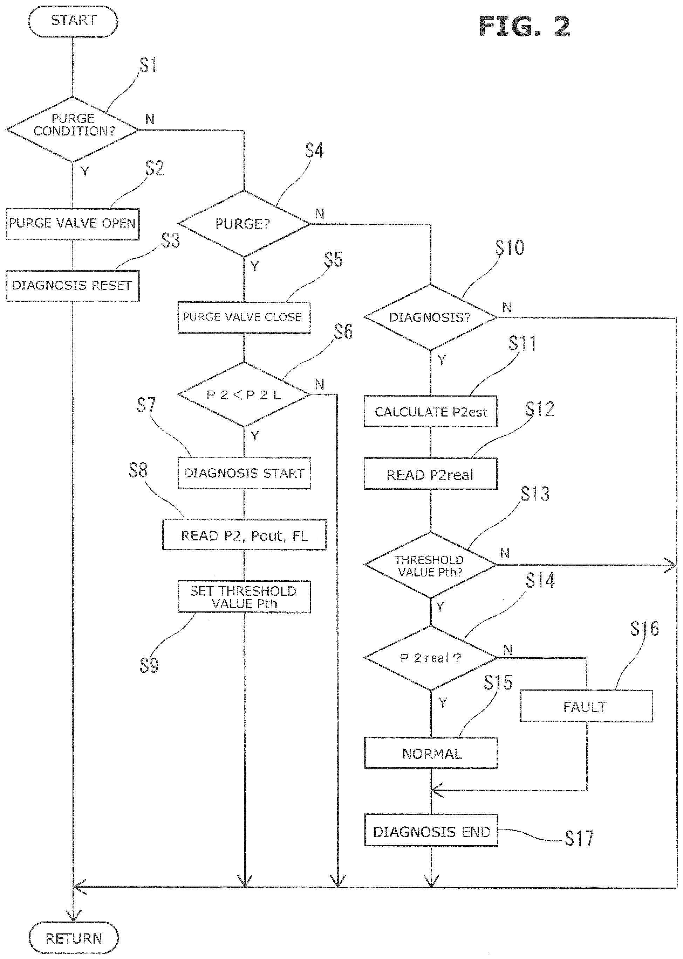

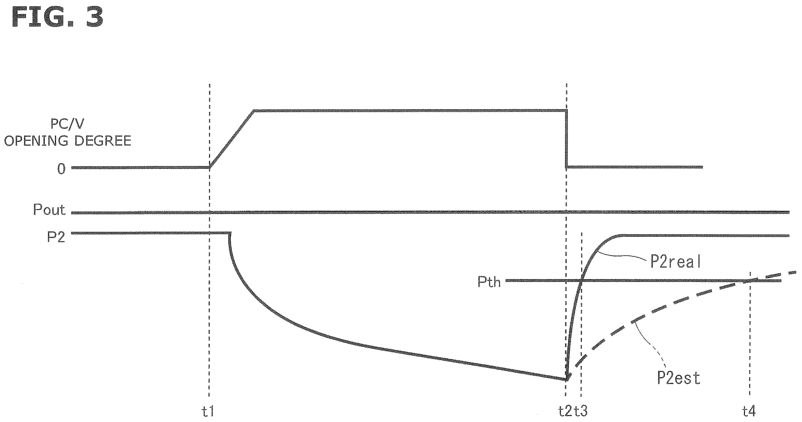

FIG. 2 is a flowchart showing a flow of the operations of the closing fixation fault diagnosis. FIG. 3 is a time chart showing a variation of the purge passage pressure P2, and so on in the closing fixation fault diagnosis. Hereinafter, the closing fixation fault diagnosis is explained with reference to FIG. 2 and FIG. 3.

A routine shown in the flowchart of FIG. 2 is repeated in the engine control unit 31 at every predetermined calculation cycle. In this embodiment, this routine is performed at every 10ms. The one processing is also referred to as "one job".

At step 1 (each step is abbreviated as S1 and so on in FIG. 2), it is judged whether or not the above-described purge condition is satisfied. When the purge condition is satisfied, the process proceeds from step 1 to step 2. The purge control valve 23 is opened. Besides, the purge control valve 23 may be configured to continuously control and vary the flow rate of the purge gas by the duty ratio control, as described above. The details of the opening degree control are omitted. In a case in which a diagnosis processing described later is started (that is, in the middle of the diagnosis processing) when the purge control valve 23 is opened at step 2, the diagnosis processing is reset at step 3. That is, the parameters relating to the diagnosis are initialized. The purge of the canister 3 is performed in accordance with this "opening" of the purge control valve 23. That is, the intake negative pressure of the internal combustion engine 1 is acted to the canister 3.

When the purge condition is not satisfied at step 1, the process proceeds to step 4. It is judged whether or not it is during the purge, that is, the purge control valve 23 is opened. When it is during the purge, the process proceeds to step 5. The purge control valve 23 is closed. That is, the purge is finished. Then, the process proceeds from step 5 to step 6. It is judged whether or not the purge passage pressure P2 (actual purge passage pressure P2real) is lower than a predetermined diagnosis permission pressure P2L (which is lower than the atmospheric pressure) (that is, the purge passage pressure P2 is large as the negative pressure). When the answer of step 6 is NO, the diagnosis is not performed since the negative pressure is insufficient. The routine is finished.

When the judgment of step 6 is YES, the sufficient negative pressure is stored during the purge. The process proceeds to step 7. The diagnosis is started. That is, the diagnosis flag representing that the diagnosis is performed is set. Then, the process proceeds from step 7 to step 8. The purge passage pressure P2, the atmospheric pressure Pout, and the fuel level FL within the fuel tank 2 are read. Next, the process proceeds to step 9. A pressure threshold value Psh used in the diagnosis is determined based on the atmospheric pressure Pout and the purge passage pressure P2. The pressure threshold value Psh is set to be between the atmospheric pressure Pout and the purge passage pressure P2. In one example, the pressure threshold value Psh is set to be a pressure value of 70% of a difference between the atmospheric pressure Pout and the purge passage pressure P2 (that is, the pressure value lower than the atmospheric pressure Pout by 30% of the difference). After the processing of step 9, the routine is finished.

When the answer of step 4 is NO, that is, when it is not during the purge, the process proceeds to step 10. It is judged whether or not it is during the diagnosis from the diagnosis flag. When it is not during the diagnosis, this routine is finished. When it is during the diagnosis, the process proceeds to step 11 and more. That is, when the diagnosis is started by the processing of steps 5-9, the process proceeds through steps 4 and 10 to step 11 after the next cycles as long as the purge is not restarted.

At step 11, the purge passage pressure P2 (the estimated purge passage pressure P2est) at this time at which for example 10ms that is the calculation cycle is elapsed from the previous routine) is calculated based on the atmospheric pressure Pout, the purge passage pressure P2 (the actual purge passage pressure P2real at the first time, the estimated purge passage pressure P2est after the second time), and the fuel level FL (corresponding to the volume of the upper space 7 within the fuel tank 2). That is, the air quantity flowing into through the drain cut valve 26 during 10ms is determined. The purge passage pressure P2 after 10ms is estimated. In this case, the purge passage pressure P2 is estimated and calculated assuming that the pressure loss of the drain cut valve 26, that is, the opening degree is a small value which can considered as the fault.

At next step 12, the actual purge passage pressure P2real is read from the value of the pressure sensor 32. At next step 13, it is judged whether or not the actual purge passage pressure P2real or the estimated purge passage pressure P2est reaches the pressure threshold value Psh. When the actual purge passage pressure P2real and the estimated purge passage pressure P2est do not reach the pressure threshold value Psh, this routine is finished.

Accordingly, after the next routine, the processing of step 11 is repeated, so that the estimation and the calculation of the estimated purge passage pressure P2est is repeated. The estimated purge passage pressure P2est is gradually increased, that is, closer to the atmospheric pressure Pout. The actual purge passage pressure P2real is also increased to be closer to the atmospheric pressure Pout. Accordingly, the actual purge passage pressure P2real reaches the pressure threshold value Psh.

When it is judged that the actual purge passage pressure P2real or the estimated purge passage pressure P2est reaches the pressure threshold value Psh, the process proceeds from step 13 to step 14. It is judged whether or not the actual purge passage pressure P2real reaches the pressure threshold value Psh. That is, it is judged whether the actual purge passage pressure P2real reaches the pressure threshold value Psh, or the estimated purge passage pressure P2est reaches the pressure threshold value Psh. When the answer of step 14 is YES, that is, when the actual purge passage pressure P2real reaches the pressure threshold value Psh, the process proceeds to step 15. It is judged that the opening degree of the drain cut valve 26 is normal (that is, it is not the closing fixation fault).

On the other hand, when the judgment of step 14 is NO, that is, when the estimated purge passage pressure P2est reaches the pressure threshold value Psh, the process proceeds to step 16. It is judged that the opening degree of the drain cut valve 26 is small, that is, that it is the closing fixation fault.

After the step 15 or step 16, at step 17, the diagnosis is finished, that is, the diagnosis flag representing that the diagnosis is performed is reset.

Besides, as described above, the purge is restarted from the start of the diagnosis to the diagnosis result, the diagnosis processing is reset so that the parameters including the estimated purge passage pressure P2est and the pressure threshold value Pth are initialized (step 3).

FIG. 3 is a time chart showing one example of the diagnosis. FIG. 3 shows a relationship of variations of the opening degree of the purge opening degree 23 (PC/V) and the purge passage pressure P2. In the example shown in the drawing, the purge control valve 23 is closed until time t1. The drain cut valve 26 is controlled to the open state. Accordingly, at this time, the purge passage pressure P2 is a pressure near the atmospheric pressure Pout. At time t1, for example, when the accelerator pedal is depressed to the middle opening degree, the purge condition is satisfied. The purge control valve 23 is opened. With this, the purge of the canister 3 is started. The purge passage pressure P2 (the actual purge passage pressure P2real) is decreased to the negative pressure side by the intake negative pressure. Besides, in the example shown in the drawing, the opening degree of the purge control valve 23 is controlled to be gradually increased. Accordingly, the purge control valve 23 is fully opened with the delay from time t1.

Then, at time t2, for example, when the driver releases the accelerator pedal so that the fuel cut is started, the purge condition is not satisfied. The purge control valve 23 is closed. In this case, the diagnosis is started when the purge passage pressure P2 is on the negative pressure side of the predetermined diagnosis permission pressure P2L.

In FIG. 3, the actual purge passage pressure P2 real is shown by a solid line, and the estimated purge passage pressure P2est is shown by a dotted line, as the purge passage pressure P2 after time t2. When the purge is finished by the closure of the purge control valve 23, the intake negative pressure is not acted to the canister 3 side. On the other hand, the drain cut valve 26 is opened, so that the actual purge passage pressure P2real is relatively rapidly increased as shown by the solid line. That is, the actual purge passage pressure P2real reaches the pressure threshold value Psh by the relatively short time period. Moreover, the actual purge passage pressure P2real is closer to the atmospheric pressure Pout. On the other hand, when the drain cut valve 26 is in the closing fixation fault so that the opening degree of the drain cut valve 26 is insufficient, the pressure increase after time t2 becomes gradual. In this example, the estimated purge passage pressure P2est shown by the dotted line is estimated subject to the lower limit opening degree at which the closing fixation fault of the drain cut valve 26 is diagnosed. Accordingly, a timing t3 at which the actual purge passage pressure P2real reaches the pressure threshold value Pth, and a timing t4 at which the estimated purge passage pressure P2real reaches the pressure threshold value Pth are compared. When the timing t3 is later than the timing t4, it is diagnosed that the drain cut valve 26 is in the closing fixation fault. When the timing t3 is earlier than the timing t4, it is diagnosed that the drain cut vale 26 is not in the closing fixation fault.

In this case, in a case in which the volume of the upper space 7 within the fuel tank 2 is large (that is, the fuel level FL is low), the increasing variation of the actual purge passage pressure P2real after time t2 is relatively gentle. This is because the upper space 7 within the fuel tank 2 is connected through the canister 3 to the purge passage 19, the upper space 7 and the purge passage 19 have the substantially identical pressure. That is, the pressure variation is gentler as the total volume is larger. In consideration with this, when the estimated purge passage pressure P2est is estimated and calculated, the fuel level FL, that is, the volume of the upper space 7 is added as the parameters. Accordingly, the variation of the estimated purge passage pressure P2est is also gentler as the upper space 7 is larger.

In this way, in this embodiment, the closing fixation fault diagnosis is performed by comparing the variation characteristic of the estimated purge passage pressure P2est, and the variation characteristic of the actual purge passage pressure P2real after the closure of the purge control valve 23. Accordingly, it is possible to perform the diagnosis even when the negative pressure introduced during the purge is not large. In particular, in the above-described embodiment, the pressure threshold value Pth is set to between the atmospheric pressure Pout, and the negative pressure when the purge control valve 23 is closed, that is, the actual purge passage pressure P2real (in particular, side closer to the atmospheric pressure Pout). The diagnosis is performed by the comparison between the time periods necessary for reaching this pressure threshold value Pth. Consequently, it is possible to perform the diagnosis with the high accuracy without the influence of the value of the negative pressure at the start of the diagnosis. Moreover, the estimated purge passage pressure P2est for the comparison is given in consideration with the volume of the upper space 7 within the fuel tank 2. Accordingly, it is possible to suppress the generation of the diagnosis error due to the value of the upper space 7.

Furthermore, in the above-described embodiment, it is possible to obtain an opportunity at every timing at which it is shifted from the purge execution to the purge stop during the normal purge control. That is, it is unnecessary to keep away from the normal purge control to introduce the negative pressure for the diagnosis. Accordingly, it is possible to increase the accuracy of the diagnosis by increasing the opportunity of the diagnosis.

Besides, in the embodiment shown in FIG. 2, when one of the actual purge passage pressure P2real and the estimated purge passage pressure P2est reaches the pressure threshold value Pth, it is judged which of the actual purge passage pressure P2real and the estimated purge passage pressure P2est reaches the pressure threshold value Pth. However, the time period necessary for the actual purge passage pressure P2real reaching the pressure threshold value Pth is measured. The time period necessary for the estimated purge passage pressure P2est reaching the pressure threshold value Pth is measured. It may be judged whether or not it is the closing fixation fault by comparing the both time periods.

Moreover, in the above-described embodiment, the estimated purge passage pressure P2est is calculated subject to the lower limit opening degree (the pressure loss) at which the fault is judged. Instead of this, the estimated purge passage pressure may be determined subject to the opening degree (the pressure loss) in the normal state. The diagnosis may be performed based on the comparison with this estimated purge passage pressure. For example, when the time period necessary for the actual purge passage pressure P2real reaching the pressure threshold value Pth is largely later than the time period necessary for the estimated purge passage pressure reaching the pressure threshold value Pth, the closing fixation fault is diagnosed.

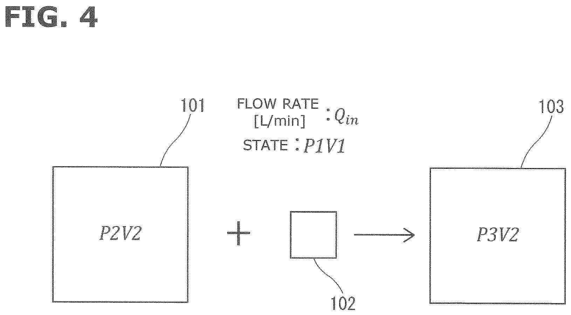

Next, the method of the estimation and the calculation of the estimated purge passage pressure P2est is explained. FIG. 4 shows an estimation principle of the purge passage pressure P2. A box represented by a symbol 101 shows an initial state of the gas in a canister system including one orifice. A volume of the box 101 is V2. A pressure of the box 101 is P2. In this case, "the canister system" means a region which includes the canister 3, the purge passage 19 (a portion on the canister 3 side of the purge control valve 23), the evaporated fuel passage 16, and the upper space 7 within the fuel tank 2, and which basically has a pressure substantially identical to the purge passage pressure P2 sensed by the pressure sensor 32. In particular, "the canister system" includes the volume of the upper space 7 within the fuel tank 2 which is determined from the fuel level FL. The pressure loss of the adsorbent 12 of the canister 3, and the pressure loss of the path of the opening degree (in particular, the above-described lower limit opening degree) of the drain cut valve 26 through which the atmosphere flows into the canister system are considered as the one orifice having a sectional area having the pressure loss identical to these pressure losses. Besides, when the drain passage 25 has a filter, it is preferable the pressure loss of this filter is included.

A small box represented by a symbol 102 represents a state of the gas (the air) added through the orifice into the box 101 during a minute unit time period, for example, the above-described 10ms. A volume of the box 102 is V1. A pressure of the box 102 is P1. A flow rate passing thorough the orifice is Qin [L/min].

A box represented by a symbol 103 is a state of the gas in the canister system after 10ms. A volume of the box 103 is V2. A pressure of the box 103 is P3. That is, the volume of the canister system is not varied after 10ms. The pressure P3 corresponds to the estimated purge passage pressure P2est.

Firstly, the flow rate Qin flowing through the orifice is determined. The flow rate Qin is determined by a following equation by using the atmospheric pressure Pout and the initial purge passage pressure P2 which are the pressures on the upstream side and the downstream side of the orifice.

$$Qin = 240 \times S\sqrt{\{(P2/1000+0.1)\,[(Pout-P2)/1000]\}}$$

In this case, S is an equivalent effective sectional area of the above-described orifice. Moreover, the influence of the temperature of the gas is relatively small. Accordingly, it is omitted.

Next, the volume V1 (the volume in the standard state) [L] of the flow rate air is determined by a following equation from the flow rate Qin.

$$V1 = (Qin/60) \times 0.01$$

P1 is a fixed value of 101.3 [kPa].

Next, the pressure P3 (that is, the estimated purge passage pressure P2est) after 10ms is determined as follows from gas state equations of the boxes 101, 102, and 103.

The gas state equations of the boxes 101, 102, and 103 are represented by the following equations.

$$P1 \cdot V1 = n1 \cdot R \cdot T$$

$$P2 \cdot V2 = n2 \cdot R \cdot T$$

$$P3 \cdot V3 = n3 \cdot R \cdot T$$

where n1+n2=n3

Accordingly, the gas state equation of the box 103 is varied as follows.

$$P3 \cdot V2 = (P1 \cdot V1/R \cdot T + P2 \cdot V2/R \cdot T] \ R \cdot T$$

$$P3 \cdot V2 = P1 \cdot V1 + P2 \cdot V2$$

$$P3 \cdot = (P1 \cdot V1 + P2 \cdot V2) / V2$$

Finally,

$$P3 \cdot = P1 \cdot (V1/V2) + P2$$

This calculation is repeated at every unit time period, for example, every 10ms described above. With this, it is possible to obtain the variation curve of the purge passage pressure P2 which is gradually varied, after time t2 at which the purge control valve 23 is opened.

Hereinabove, the one embodiment according to the present invention is explained. However, the present invention is not limited to the above-described embodiment. Various variations are applicable to the present invention. For example, the internal combustion engine 1 of FIG. 1 is the natural intake engine. However, the internal combustion engine 1 may have a configuration having a supercharger such as a turbocharger. For example, the diagnosis can be similarly performed by using the intake negative pressure as long as the engine has, for example, a configuration in which the purge gas is introduced to a downstream portion of the throttle valve. Moreover, it may be a configuration in which a purge pump that is an electric pump and so on is provided in the purge passage, and in which the purge pump introduces the purge gas on the upstream side of the throttle valve.

Moreover, in the calculation method of the estimated purge passage pressure P2est explained in FIG. 2-4, the pressure variations at every 10ms are calculated at every 10ms. Accordingly, the variation of the purge passage pressure P2 under the lower limit opening degree which is synchronized with the actual time is successively estimated. However, the variation of the purge passage pressure P2 after time t2 may be estimated by a shorter time period. For example, the time period necessary for reaching the pressure threshold value Pth may be estimated and calculated before the actual time period is elapsed. It may be compared with the time period necessary for the actual purge passage pressure P2real reaching the pressure threshold value Pth.

## Claims

1. A fault diagnosis method of an evaporated fuel processing device, wherein:

- the evaporated fuel processing device comprises:

- a canister (3) including a charge port (13) connected to an upper space (7) of a fuel tank (2),
- a purge passage (19) connecting a purge port of the canister (3) and an intake system of an internal combustion engine (1),
- a purge control valve (23),
- a drain passage (25) which is configured to open a drain port (15) of the canister (3) to an atmosphere, and which includes a drain cut valve (26), and
- a pressure sensor (32) configured to sense, as a purge passage pressure, a pressure between the purge control valve (23) and the canister (3) in the purge passage (19), and

- the fault diagnosis method comprises:

- performing a purge by opening the purge control valve (23) in a state in which the drain cut valve (26) is controlled to be opened;
- closing the purge valve (23), and estimating the purge passage pressure;
- measuring an actual pressure variation by the pressure sensor (32);
- setting a pressure threshold value;

the fault diagnosis method being **characterized in that** it further comprises

- diagnosing a closing fixation of the drain cut valve (26) by comparing a time period necessary for the estimated pressure reaching the pressure threshold value, and a time period necessary for the pressure measured by the pressure sensor (32) reaching the pressure threshold value.

2. The fault diagnosis method as claimed in claim 1, wherein:

- a volume of the upper space (7) of the fuel tank (2) is included in a volume of an overall system which is a basis for the estimation of the pressure variation; and
- the volume of the upper space (7) within the fuel tank (2) is determined based on a residual quantity of the fuel.

3. The fault diagnosis method as claimed in claim 1, wherein the pressure threshold value is variably set in accordance with the purge passage pressure when the purge control valve (23) is closed.

4. The fault diagnosis method as claimed in claim1, wherein the pressure threshold value is set based on an atmospheric pressure.

5. The fault diagnosis method as claimed in one of claims 2 to 4, wherein the estimation of the variation of the purge passage pressure is performed based on a pressure loss at which the fault of the drain cut valve (26) is judged.

6. The fault diagnosis method as claimed in claim 5, wherein:

- a pressure loss of an overall atmosphere introduction path including the pressure loss at which the fault of the drain cut valve (26) is judged, and a pressure loss of the canister (3) is considered as one orifice; and
- a pressure variation from an actual pressure value when the purge control valve (23) is closed is calculated and estimated at every predetermined unit time period.

7. The fault diagnosis method as claimed in one of claims 1 to 6, wherein the diagnosis is performed when the purge passage pressure when the purge control valve (23) is closed is a large negative pressure relative to a predetermined negative pressure.

8. A fault diagnosis device of an evaporated fuel processing device, wherein:

- the evaporated fuel processing device comprises:

- a canister (3) including a charge port (13) connected to an upper space (7) of a fuel tank (2),
- a purge passage (19) connecting a purge port (14) of the canister (3) and an intake system of an internal combustion engine (1),

- a purge control valve (23),
- a drain passage (25) which is configured to open a drain port (15) of the canister (3) to an atmosphere, and which includes a drain cut valve (26), and
- a pressure sensor (32) configured to sense, as a purge passage pressure, a pressure between the purge control valve (23) and the canister (3) in the purge passage (19), and

- the fault diagnosis device comprises:

- a purge control section configured to open the purge control valve (23) in a state in which the drain cut valve (26) is controlled to be opened, and then to close the purge control valve (23);
- a pressure estimating section configured to estimate the purge passage pressure after the purge control valve (23) is closed;

the fault diagnosis device being **characterized in that** it further comprises:

- a diagnosis section configured to set a pressure threshold value, and to compare a time period necessary for the estimated pressure reaching the pressure threshold value, and a time period necessary for the pressure measured by the pressure sensor (32) reaching the pressure threshold value, and thereby to diagnose a closing fixation of the drain cut valve (26).

**Patentansprüche**

1. Fehlerdiagnoseverfahren einer Verarbeitungsvorrichtung für verdampften Kraftstoff, wobei:

- die Verarbeitungsvorrichtung für verdampften Kraftstoff umfasst:

- einen Kanister (3), der einen Ladeanschluss (13) enthält, der mit einem oberen Raum (7) eines Kraftstofftanks (2) verbunden ist,
- einen Spüldurchgang (19), der einen Spülanschluss des Kanisters (3) und ein Ansaugsystem eines Verbrennungsmotors (1) verbindet,
- ein Spülsteuerventil (23),
- einen Ablassdurchgang (25), der konfiguriert ist, einen Ablassanschluss (15) des Kanisters (3) zu einer Atmosphäre zu öffnen, und der ein Ablassabsperrventil (26) enthält, und
- einen Drucksensor (32), der konfiguriert ist, als einen Spüldurchgangsdruck einen Druck zwischen dem Spülsteuerventil (23) und dem Kanister (3) in dem Spüldurchgang (19) zu erfassen, und

- das Fehlerdiagnoseverfahren umfasst:

- Durchführen einer Spülung durch Öffnen des Spülsteuerventils (23) in einem Zustand, in dem das Ablassabsperrventil (26) gesteuert wird, geöffnet zu werden;
- Schließen des Spülventils (23) und Schätzen des Spüldurchgangsdrucks;
- Messen einer tatsächlichen Druckvariation durch den Drucksensor (32);
- Einstellen eines Druckschwellenwerts; wobei das Fehlerdiagnoseverfahren **dadurch gekennzeichnet ist, dass** es ferner umfasst
- Diagnostizieren einer Schließfixierung des Ablassabsperrventils (26) durch Vergleichen einer Zeitdauer, die notwendig ist, damit der geschätzte Druck den Druckschwellenwert erreicht, und einer Zeitdauer, die notwendig ist, damit der durch den Drucksensor (32) gemessene Druck den Druckschwellenwert erreicht.

2. Fehlerdiagnoseverfahren nach Anspruch 1, wobei:

- ein Volumen des oberen Raums (7) des Kraftstofftanks (2) in einem Volumen eines Gesamtsystems enthalten ist, das eine Grundlage für die Schätzung der Druckvariation ist; und
- das Volumen des oberen Raums (7) innerhalb des Kraftstofftanks (2) basierend auf einer Restmenge des Kraftstoffs bestimmt wird.

3. Fehlerdiagnoseverfahren nach Anspruch 1, wobei der Druckschwellenwert gemäß dem Spüldurchgangsdruck variabel eingestellt wird, wenn das Spülsteuerventil (23) geschlossen ist.

4. Fehlerdiagnoseverfahren nach Anspruch 1, wobei der Druckschwellenwert basierend auf einem atmosphärischen Druck eingestellt wird.

5. Fehlerdiagnoseverfahren nach einem der Ansprüche 2 bis 4, wobei die Schätzung der Variation des Spüldurchgangsdrucks basierend auf einem Druckverlust durchgeführt wird, bei dem der Fehler des Ablassabsperrventils (26) beurteilt wird.

6. Fehlerdiagnoseverfahren nach Anspruch 5, wobei:

   - ein Druckverlust eines Gesamtatmosphäreneinleitungswegs, der den Druckverlust enthält, bei dem der Fehler des Ablassabsperrventils (26) beurteilt wird, und ein Druckverlust des Kanisters (3) als eine Öffnung betrachtet werden; und
   - eine Druckvariation von einem tatsächlichen Druckwert, wenn das Spülsteuerventil (23) geschlossen ist, zu jeder vorbestimmten Einheitszeitdauer berechnet und geschätzt wird.

7. Fehlerdiagnoseverfahren nach einem der Ansprüche 1 bis 6, wobei die Diagnose durchgeführt wird, wenn der Spüldurchgangsdruck, wenn das Spülsteuerventil (23) geschlossen ist, ein großer Unterdruck relativ zu einem vorbestimmten Unterdruck ist.

8. Fehlerdiagnosevorrichtung einer Verarbeitungsvorrichtung für verdampften Kraftstoff, wobei:

   - die Verarbeitungsvorrichtung für verdampften Kraftstoff umfasst:

      - einen Kanister (3), der einen Ladeanschluss (13) enthält, der mit einem oberen Raum (7) eines Kraftstofftanks (2) verbunden ist,
      - einen Spüldurchgang (19), der einen Spülanschluss (14) des Kanisters (3) und ein Ansaugsystem eines Verbrennungsmotors (1) verbindet,
      - ein Spülsteuerventil (23),
      - einen Ablassdurchgang (25), der konfiguriert ist, einen Ablassanschluss (15) des Kanisters (3) zu einer Atmosphäre zu öffnen, und der ein Ablassabsperrventil (26) enthält, und
      - einen Drucksensor (32), der konfiguriert ist, als einen Spüldurchgangsdruck einen Druck zwischen dem Spülsteuerventil (23) und dem Kanister (3) in dem Spüldurchgang (19) zu erfassen, und

   - die Fehlerdiagnosevorrichtung umfasst:

      - einen Spülsteuerabschnitt, der konfiguriert ist, das Spülsteuerventil (23) in einem Zustand zu öffnen, in dem das Ablassabsperrventil (26) gesteuert wird, geöffnet zu werden, und dann das Spülsteuerventil (23) zu schließen;
      - einen Druckschätzabschnitt, der konfiguriert ist, den Spüldurchgangsdruck zu schätzen, nachdem das Spülsteuerventil (23) geschlossen ist; wobei die Fehlerdiagnosevorrichtung **dadurch gekennzeichnet ist, dass** sie ferner umfasst

      - einen Diagnoseabschnitt, der konfiguriert ist, einen Druckschwellenwert einzustellen und eine Zeitdauer, die notwendig ist, damit der geschätzte Druck den Druckschwellenwert erreicht, und eine Zeitdauer, die notwendig ist, damit der durch den Drucksensor (32) gemessene Druck den Druckschwellenwert erreicht, zu vergleichen und dadurch eine Schließfixierung des Ablassabsperrventils (26) zu diagnostizieren.


## Revendications

1. Procédé de diagnostic de défaillance d'un dispositif de traitement de carburant évaporé, dans lequel :

   - le dispositif de traitement de carburant évaporé comprend :

      - une cartouche (3) comprenant un orifice de charge (13) relié à un espace supérieur (7) d'un réservoir de carburant (2),
      - un passage de purge (19) reliant un orifice de purge de la cartouche (3) et un système d'admission d'un moteur à combustion interne (1),

- une soupape de commande de purge (23),
- un passage de drainage (25) qui est configuré pour ouvrir un orifice de drainage (15) de la cartouche (3) vers l'atmosphère, et qui comprend une soupape de coupure de drainage (26), et
- un capteur de pression (32) configuré pour détecter, en tant que pression de passage de purge, une pression entre la soupape de commande de purge (23) et la cartouche (3) dans le passage de purge (19), et

- le procédé de diagnostic de défaillance comprend :

- la réalisation d'une purge en ouvrant la soupape de commande de purge (23) dans un état dans lequel la soupape de coupure de drainage (26) est commandée pour être ouverte ;
- la fermeture de la soupape de purge (23), et l'estimation de la pression de passage de purge ;
- la mesure d'une variation de pression réelle par le capteur de pression (32) ;
- le réglage d'une valeur de seuil de pression ; le procédé de diagnostic de défaillance étant **caractérisé en ce qu'**il comprend en outre
- le diagnostic d'une fixation de fermeture de la soupape de coupure de drainage (26) en comparant une période de temps nécessaire pour que la pression estimée atteigne la valeur de seuil de pression, et une période de temps nécessaire pour que la pression mesurée par le capteur de pression (32) atteigne la valeur de seuil de pression.

2. Procédé de diagnostic de défaillance selon la revendication 1, dans lequel :

- un volume de l'espace supérieur (7) du réservoir de carburant (2) est inclus dans un volume d'un système global qui est une base pour l'estimation de la variation de pression ; et
- le volume de l'espace supérieur (7) à l'intérieur du réservoir de carburant (2) est déterminé sur la base d'une quantité résiduelle du carburant.

3. Procédé de diagnostic de défaillance selon la revendication 1, dans lequel la valeur de seuil de pression est réglée de manière variable en fonction de la pression de passage de purge lorsque la soupape de commande de purge (23) est fermée.

4. Procédé de diagnostic de défaillance selon la revendication 1, dans lequel la valeur de seuil de pression est réglée sur la base d'une pression atmosphérique.

5. Procédé de diagnostic de défaillance selon l'une des revendications 2 à 4, dans lequel l'estimation de la variation de la pression de passage de purge est réalisée sur la base d'une perte de pression à laquelle la défaillance de la soupape de coupure de drainage (26) est évaluée.

6. Procédé de diagnostic de défaillance selon la revendication 5, dans lequel :

- une perte de pression d'un trajet d'introduction d'atmosphère globale comprenant la perte de pression à laquelle la défaillance de la soupape de coupure de drainage (26) est évaluée, et une perte de pression de la cartouche (3) est considérée comme un orifice ; et
- une variation de pression à partir d'une valeur de pression réelle lorsque la soupape de commande de purge (23) est fermée est calculée et estimée à chaque période de temps unitaire prédéterminée.

7. Procédé de diagnostic de défaillance selon l'une des revendications 1 à 6, dans lequel le diagnostic est réalisé lorsque la pression de passage de purge lorsque la soupape de commande de purge (23) est fermée est une grande pression négative par rapport à une pression négative prédéterminée.

8. Dispositif de diagnostic de défaillance d'un dispositif de traitement de carburant évaporé, dans lequel :

- le dispositif de traitement de carburant évaporé comprend :

- une cartouche (3) comprenant un orifice de charge (13) relié à un espace supérieur (7) d'un réservoir de carburant (2),
- un passage de purge (19) reliant un orifice de purge (14) de la cartouche (3) et un système d'admission d'un moteur à combustion interne (1),
- une soupape de commande de purge (23),

- un passage de drainage (25) qui est configuré pour ouvrir un orifice de drainage (15) de la cartouche (3) vers l'atmosphère, et qui comprend une soupape de coupure de drainage (26), et
- un capteur de pression (32) configuré pour détecter, en tant que pression de passage de purge, une pression entre la soupape de commande de purge (23) et la cartouche (3) dans le passage de purge (19), et

- le dispositif de diagnostic de défaillance comprend :

- une section de commande de purge configurée pour ouvrir la soupape de commande de purge (23) dans un état dans lequel la soupape de coupure de drainage (26) est commandée pour être ouverte, puis pour fermer la soupape de commande de purge (23) ;
- une section d'estimation de pression configurée pour estimer la pression de passage de purge après que la soupape de commande de purge (23) est fermée ; le dispositif de diagnostic de défaillance étant **caractérisé en ce qu'**il comprend en outre
- une section de diagnostic configurée pour régler une valeur de seuil de pression, et pour comparer une période de temps nécessaire pour que la pression estimée atteigne la valeur de seuil de pression, et une période de temps nécessaire pour que la pression mesurée par le capteur de pression (32) atteigne la valeur de seuil de pression, et pour ainsi diagnostiquer une fixation de fermeture de la soupape de coupure de drainage (26).

FIG. 1

# FIG. 2

EP 4 108 905 B1

# FIG. 3

# FIG. 4

FLOW RATE [L/min] $: Q_{in}$

STATE $: P1V1$

101

103

$P2V2$

$+$

$\longrightarrow$

$P3V2$

102

**EP 4 108 905 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9264207 B
- JP H10141153 A